# EUROPÄISCHE PATENTSCHRIFT

(11) **EP 0 625 646 B1**
(45) Veröffentlichungstag und Bekanntmachung des Hinweises auf die Patenterteilung: **23.04.1997**
(21) Anmeldenummer: 94102769.0
(22) Anmeldetag: 24.02.1994
(51) Int. Cl.: F16C 27/06, B60K 17/24

(54) **Kardanwellenlager**
Cardan shaft bearing
Palier d'arbre cardan

(30) Priorität: 21.05.1993 DE 4317062
(43) Veröffentlichungstag der Anmeldung: 23.11.1994
(73) Patentinhaber: Firma Carl Freudenberg, D-69469 Weinheim (DE)
(72) Erfinder: Hamaekers, Arno, D-69517 Gorxheim-Unterflockenbach (DE)

(56) Entgegenhaltungen:
- DE-A- 3 908 965
- FR-A- 2 258 559
- GB-A- 1 235 448

## Beschreibung

Die Erfindung betrifft ein Kardanwellenlager mit den Merkmalen aus dem Oberbegriff von Anspruch 1.

Ein solches Kardanwellenlager ist aus der DE 39 08 965 A1 bekannt. Das hydraulisch dämpfende Kardanwellenlager weißt durch seinen weichelastischen Arbeitsbereich und den hydraulisch dämpfenden Anschlagbereich sehr gute Gebrauchseigenschaften auf. Das Kardanwellenlager ist mehrteilig ausgeführt und wird durch drei Fügevorgänge montiert. Ein U-förmig ausgebildeter Gummiring und ein Federring aus elastomerem Werkstoff, der die Begrenzungswandung der mit Hydraulikflüssigkeit gefüllten Kammern bildet, sind zweiteilig ausgebildet und werden während der Montage im Bereich des Halterings zusammengefügt.

Ein weiteres Kardanwellenlager ist aus der GB-A-2 068 477 bekannt. Der Außenring eines Gummilagers und ein Haltering, der einen Bestandteil eines Lagerbocks bildet, sind durch einen einvulkanisierten Gummiring miteinander verbunden. Der Gummiring ist blockförmig ausgebildet und in axialer Richtung beiderseits mit nutförmigen Ausnehmungen, die umfangsseitig umlaufen, versehen. Dabei ist zu beachten, daß die radiale Nachgiebigkeit des Lagers durch die blockförmige Ausgestaltung für viele Anwendungsfälle zu gering ist. Außerdem ist die Festlegung des Gummirings an den radial angrenzenden Ringen hinsichtlich einer langen Gebrauchsdauer wenig befriedigend, insbesondere dann, wenn die zu lagernde Welle taumelnde Bewegungen ausführt. Die im Bereich der Halteflächen auftretenden Zug- und Schubspannungen können zu einem vorzeitigen Ausfall des Lagers führen.

Der Erfindung liegt die Aufgabe zugrunde, ein Kardanwellenlager der eingangs genannten Art derart weiterzuentwickeln, daß das Lager einfach herstellbar ist, daß sich eine verbesserte Festlegung des Gummiringes am Außen- und am Haltering ergibt, daß die Nachgiebigkeit des Lagers in radialer und axialer Richtung verbessert wird und daß es einer Oberflächenbearbeitung der abzustützenden Welle nicht mehr bedarf.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Zur Lösung der Aufgabe ist es vorgesehen, daß der Gummiring avulkanisiert ist, daß der Innenring des Wälzlagers auf der der abzustützenden Welle zugewandten Seite mit einer Gummierung versehen ist, und daß der Gummiring und der Federring einstückig in einander übergehend ausgebildet sind und einen Anschlagpuffer, die Anschlagflächen, eine wellenförmige Profilierung der Anschlagflächen und eine Aufnahme für den Außenring des Wälzlagers umfassen. Hierbei ist von Vorteil, daß das erfindungsgemäße Kardanwellenlager einen weichelastischen Arbeitsbereich aufweist und einfach herstellbar ist. Dadurch, daß der Gummiring zusätzlich zur Festlegung an der Außenumfangsfläche des Außenrings und der Innenumfangsfläche des Halterings zumindest teilweise auch im Bereich von deren axialen Begrenzungsflächen haftend befestigt ist, ergibt sich eine gute Haltbarkeit der Gummi-Metallverbindung auch dann, wenn die zu lagernde Welle taumelnde Bewegungen ausführt und/oder sich in axialer Richtung verlagert. Gute Gebrauchseigenschaften während einer langen Gebrauchsdauer sind dadurch bedingt. Dadurch, daß der Innenring des Wälzlagers auf der der zu lagernden Welle zugewandten Seite mit einer Gummierung versehen ist, kann die Einleitung von Schwingungen der Welle in das Lager reduziert werden. Außerdem ist von hervorzuhebender Bedeutung, daß es einer Bearbeitung der Welle und einer exakten Passung zwischen dem Wälzlager und der Welle nicht bedarf.

Durch die mit der Dämpfungsschicht aus Gummi überdeckten Anschlagflächen können Anschlaggeräusche bei relativen Extremauslenkungen von Haltering und Außenring zueinander vermieden werden. Durch den Abbau von Belastungsspitzen bei Anschlagberührung der beiden Teile, wird die mechanische Belastung auf das Wälzlager und/oder den elastomeren Werkstoff des Federringes begrenzt, wodurch eine insgesamt längere Gebrauchsdauer des Lagers bedingt ist. Dadurch, daß der Federring und der Gummiring einstückig ineinander übergehend ausgebildet sein, wird konventionell entformbare, einteilige Gummi-Metallausführung erzielt. Sekundäre Hilfsmittel zur Befestigung der Teile aneinander sind dadurch entbehrlich und einer zusätzlichen Abdichtung bedarf es nicht.

Durch die einstückig ineinander übergehende Ausgestaltung von Dämpfungsschicht und Gummiring werden zusätzliche Arbeitsgänge zur Herstellung der Dämpfungsschicht vermieden, was einer einfachen Herstellbarkeit des Lagers zugute kommt. Ferner wird durch die zumindest teilweise Ummantelung der Metallteile die Entstehung von Korrosion vermieden.

Gemäß einer vorteilhaften Ausgestaltung kann es vorgesehen sein, daß die Gummierung auf der der Welle zugewandten Seite eine Profilierung aufweist. Die Profilierung kann durch radial in Richtung der Welle geöffnete Nuten gebildet sein, wobei die Nuten parallel zur Achse des Kardanwellenlagers beiderseits völlig geöffnet sind. Die Gummierung umgreift die unbearbeitete Welle nur in Teilbereichen ihres Umfangs reibschlüssig. Kostenintensive Passungen zwischen dem Innenring des Wälzlagers und der Welle können vermieden werden.

Der Haltering kann auf einem Federring aus Gummi relativ radialelastisch gestützt sein. Durch diese Ausgestaltung wird der Federweg in radialer Richtung zwischen dem Außenring und dem Haltering weiter vergrößert, wobei von hervorzuhebendem Vorteil ist, daß der Federring derart dimensioniert und geformt sein kann, daß er bei Extremauslenkungen des Wälzlagers, bezogen auf den Haltering, eine Endlagendämpfung bewirkt. Das Kardanwellenlager weist bei Radialauslenkungen der abzustützenden Welle so lange eine vergleichsweise große Nachgiebigkeit auf, bis der Außenring den Federring anliegend berührt. Zur Dämpfung von Extremauslenkungen ist der Federring weniger nachgiebig ausgebildet. Der Federring kann beispielsweise mit einer Armierung versehen sein. Anschlaggeräusche sowie eine unzulässig hohe Materialbeanspruchung des elasetomeren Werkstoffs können dadurch vermieden werden.

Die flüssigkeitsgefüllten Hohlräume des Kardanwellenlagers Kardanwellenlagers bedingen eine hydraulische Dämpfung von Extremauslenkungen des Lagers in radialer Richtung relativ zum Haltering. Die flüssigkeitsgefüllten Hohlräume sind bevorzugt durch eine membranartig dünne, flexible Trennwand voneinander getrennt, um eine gute Entkopplung akustisch störender Schwingungen zu bewirken. Der Zwischenring kann aus einer niedrigdämpfenden Naturkautschukmischung bestehen, um eine Schwingungsübertragung hochfrequenter, akustisch wirksamer Schwingungen von einem der Ringe in den anderen zu verhindern. Bevorzugt gelangen mehrere in Umfangsrichtung aufeinanderfolgende, flüssigkeitsgefüllte Kammern zur Anwendung, um eine Dämpfung von Schwingungen zu bewirken, unabhängig davon, in welcher Richtung sie eingeleitet werden. Bei einer Anschlagberührung des Wälzlagers am Federring wird dieser in radialer Richtung in einem Teilbereich zusammengedrückt, wodurch das ursprünglich vorhandene Flüssigkeitsvolumen durch die Dämpfungsöffnungen in die benachbarten Kammern relativ geringeren Drucks verlagert wird. Durch die Flüssigkeitsverlagerung erfolgt ein großer Energieabbau, so daß die Entstehung von Anschlaggeräuschen unterdrückt wird. Die radialen Ausweichbewegungen der gelagerten Kardanwelle lassen sich in ihrer Richtung nicht ohne weiteres vorher bestimmen, und es hat sich unter diesem Gesichtspunkt als zweckmäßig erwiesen, wenn die Kammern in Umfangsrichtung möglichst gleichmäßig verteilt sind.

Die Hohlräume können auf der radial nach außen weisenden Seite durch den Haltering verschlossen sein, wobei der Haltering und ein im Außenumfang des Federrings angeordneter Lagerring mit einem Preßsitz verbunden sind. Die Montage eines derartigen Lagers ist durch den einfachen Aufbau besonders vorteilhaft. Die Komplettierung des hydraulisch dämpfenden Lagers erfolgt durch das Überziehen und Bördeln des Halterings unter Dämpfungsfluid. Der gummielastische Werkstoff des Federringes dichtet die flüssigkeitsgefüllten Hohlräume gegenüber dem Haltering und der Umgebung ab.

Der Lagerring kann als Armierung des Federrings im Bereich seiner Festlegung innerhalb des Halterings ausgebildet sein.

Der Gegenstand der Erfindung wird nachfolgend anhand der Zeichnungen weiter verdeutlicht. Es zeigen:
- Fig. 1: ein Ausführungsbeispiel des erfindungsgemäßen Kardanwellenlagers in geschnittener Darstellung entlang der Linie A-A aus Fig. 2.
- Fig. 2: das Lager aus Fig. 1, geschnitten entlang der Linie B-B.

Das gezeigte Kardanwellenlager umfaßt einen Außenring 1 eines Wälzlagers 2 und einen Haltering 3, die durch einen anvulkanisierten Gummiring 4 miteinander verbunden und sowohl radial- als auch axial elastisch aufeinander abgestützt sind. Der Gummiring 4 umschließt in radialer Richtung innenseitig den Außenring 1 des Wälzlagers 2 im Bereich der beiden axialen Begrenzungsflächen. Davon ausgehend erstreckt sich der Gummiring 4 mit einem parallel zur Achse 5 geöffneten, U-förmigen Profil in radialer Richtung und geht einstückig in den Federring 6 über, der adhäsiv mit einem Lagerring 9 verbunden und flüssigkeitsdicht innerhalb des Halterings 3 festgelegt ist. Die Dämpfungsschicht 12 der einander zugewandten Oberflächenbereiche des Gummirings 4 innerhalb des U-förmig geöffneten Profils, sind in diesem Ausführungsbeispiel zur Vermeidung von Anschlaggeräuschen in Umfangsrichtung sinusförmig ausgebildet. Der elastomere Werkstoff des Gummirings 4 umschließt den Außenring 1 des Wälzlagers 2 mit einer ebenen Oberfläche, wobei die der Anschlagfläche 11 des Außenrings 1 gegenüberliegende Anschlagfläche 10 eine umfangsseitig sich erstreckende, wellenförmige Profilierung aufweist. Die Hohlräume 7, die durch den Federring 6 und den Haltering 3 begrenzt und in Umfangsrichtung gleichmäßig verteilt sind, sind mit einer Dämpfungsflüssigkeit gefüllt und flüssigkeitsleitend miteinander verbunden. Die flüssigkeitsgefüllten Hohlräume 7 sind durch membranartig dünne, flexible Trennwände voneinander getrennt und durch Dämpfungsöffnungen miteinander verbunden. Bei einer radialen Ausweichbewegung des Wälzlagers 2 in bezug auf den Haltering 3 in einer beliebigen radialen Richtung ergibt sich dadurch eine Zusammenpressung der dort befindlichen Hohlräume 7 und eine Verlagerung von Flüssigkeitsbestandteilen durch die Dämpfungsöffnungen 8 in die benachbarten Hohlräume 7 unter Erzielung einer guten Dämpfungswirkung. Plötzlich auftretende, schlagartige Belastungen werden dadurch gemindert und die Entstehung von Anschlaggeräuschen sowie mechanischen Überbeanspruchungen vermieden. Innerhalb der Hohlräume 7 sind einstückig mit dem Gummiring 4 ausgebildete Anschlagpuffer 13 vorgesehen, die im gezeigten, schwingungsfreien Zustand einen radialen Abstand zum Haltering 3 aufweisen.

Das Wälzlager 2 ist auf der der zu lagernden Welle 14 zugewandten Seite mit einer Gummierung versehen. Betriebsbedingt in das Lager eingeleitete Schwingungen werden durch diese Ausgestaltung reduziert. Außerdem ist von hervorzuhebendem Vorteil, daß es einer Bearbeitung der Welle 14 und einer exakten Passung zwischen dem Wälzlager 2 und der Welle 14 nicht bedarf. Zum Ausgleich von Toleranzen ist die Gummierung des Innenrings ähnlich profiliert, wie die Anschlagfläche 10.

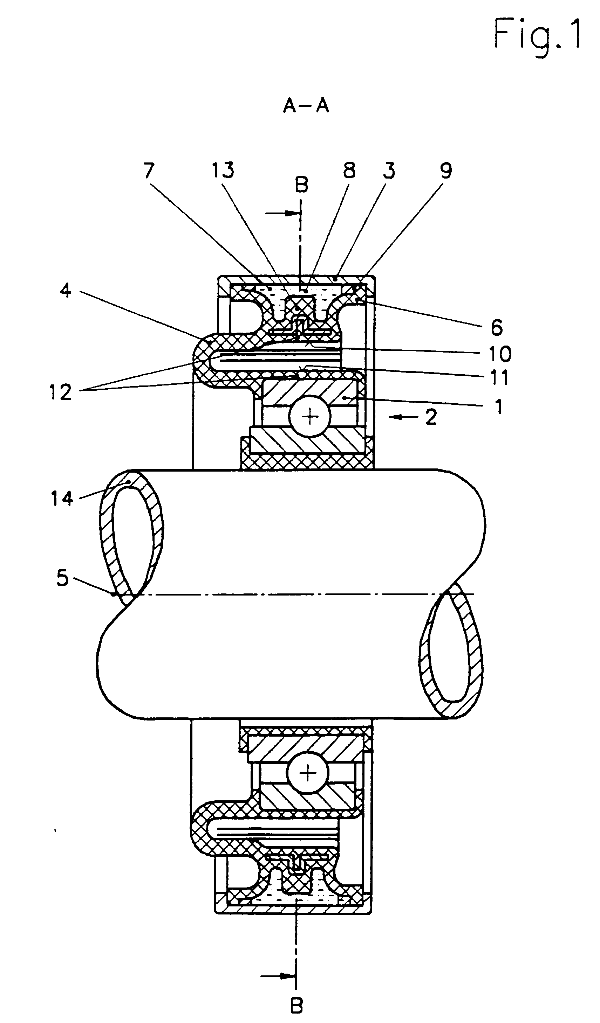

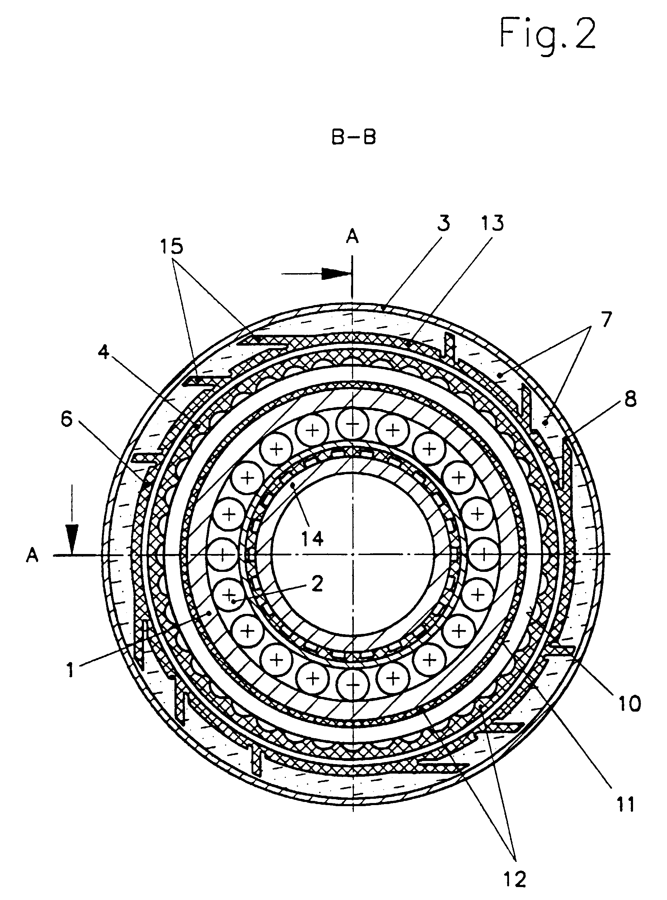

In Fig. 2 ist das Lager aus Fig. 1 entlang der Linie B-B geschnitten dargestellt. Die Trennwände 15 sind der Achse 5 des gezeigten Kardanwellenlagers in einer geneigten Weise zugeordnet. Radiale Relativverlagerungen des Wälzlagers 2 in bezug auf den Haltering 3 vermögen dadurch in den Trennwänden 15 nicht mehr zum Auftreten von Stauchspannungen zu führen. Auch über die Trennwände 15 können dadurch akustisch wirksame, hochfrequente Schwingungen bei einer Anschlagberührung nicht in störendem Maße übertragen werden. Die flüssigkeitsgefüllten Hohlräume 7 sind flüssigkeitsleitend miteinander verbunden, wobei die Trennwände 15 und der Haltering 3 zwischen den Hohlräumen 7 eine Drosselöffnung 8 bilden. Die Dämpfungswirkung beruht auf der Hindurchpressung von Flüssigkeitsbestandteilen durch die Drosselöffnungen 8 von dem Hohlraum 7 relativ höheren Drucks in benachbarter Hohlräume 7 relativ geringeren Drucks. Die Anschlagfläche 10, die dem gummierten Außenring 1 des Wälzlagers 2 in radialer Richtung benachbart zugeordnet ist, weißt ein in Umfangsrichtung sich erstreckendes, sinusförmiges Profil auf, wodurch zusätzlich zu der Flüssigkeitsverlagerung innerhalb der Hohlräume eine Endlagendämpfung sowie die Vermeidung von Anschlaggeräuschen bewirkt wird. Die Welle 14 ist im Bereich ihrer Oberfläche unbearbeitet, was in wirtschaftlicher Hinsicht von hervorzuhebendem Vorteil ist. Das Wälzlager 2 ist im Bereich seines Innenumfangs mit einer Gummierung versehen, die die unbearbeitete Welle zumindest teilweise reibschlüssig umgreift. Kostenintensive Passungen zwischen dem Innenring des Wälzlagers 2 und der Welle 14 können dadurch vermieden werden.

## Patentansprüche

1. Kardanwellenlager, bei dem der Außenring (1) eines Wälzlagers (2) und ein Haltering (3) durch einen Gummiring (4) verbunden und radialelastisch aufeinander abgestützt sind, wobei der Haltering (3) und der Außenring (1) einander zugewandte Anschlagflächen (10,11) haben, die zumindest teilweise von einer Dämpfungsschicht (12) aus Gummi überdeckt sind, wobei der Gummiring (4) ein U-förmiges Profil hat, das parallel zur Achse (5) des Kardanwellenlagers geöffnet ist, wobei der Gummiring (4) an dem Außenring (1) und an dem Haltering (3) zumindest teilweise im Bereich von deren axialen Begrenzungsflächen festgelegt ist, wobei das Kardanwellenlager mit einem Federring (6) aus Gummi ausgebildet ist, der in Umfangsrichtung verteilte, flüssigkeitsgefüllte Hohlräume (7) aufweist, die durch Öffnungen (8) miteinander verbunden sind und wobei die Dämpfungsschicht (12) und der Gummiring (4) einstückig ineinander übergehend ausgebildet sind, dadurch gekennzeichnet, daß der Gummiring (4) anvulkanisiert ist, daß der Innenring des Wälzlagers (2) auf der der abzustützenden Welle (14) zugewandten Seite mit einer Gummierung versehen ist und daß der Gummiring (4) und der Federring (6) einstückig ineinander übergehend ausgebildet sind, und einen Anschlagpuffer (13), die Anschlagflächen (10, 11), eine wellenförmige Profilierung der Anschlagflächen (10,11) und eine Aufnahme für den Außenring (1) des Wälzlagers (2) umfassen.

2. Kardanwellenlager nach Anspruch 1, dadurch gekennzeichnet, daß die Gummierung auf der der Welle (14) zugewandten Seite eine Profilierung aufweist.

3. Kardanwellenlager nach Anspruch 2, dadurch gekennzeichnet, daß die Profilierung durch radial in Richtung der Welle (14) geöffnete Nuten gebildet ist und daß die Nuten parallel zur Achse (5) des Kardanwellenlagers beiderseits völlig geöffnet sind.

4. Kardanwellenlager nach einem der Ansprüche 1 bis 3, dadurch gekennzeichnet, daß der Haltering (3) auf dem Federring (6) aus Gummi relativ radial elastisch abgestützt ist.

5. Kardanwellenlager nach einem der Ansprüche 1 bis 4, dadurch gekennzeichnet, daß die Hohlräume (7) auf der radial nach außen weisenden Seite durch den Haltering (3) flüssigkeitsdicht verschlossen sind.

6. Kardanwellenlager nach einem der Ansprüche 1 bis 5, dadurch gekennzeichnet, daß der Haltering (3) und ein im Außenumfang des Federrings (6) angeordneter Lagerring (9) mit einem Preßsitz verbunden sind.

7. Kardanwellenlager nach Anspruch 6, dadurch gekennzeichnet, daß der Lagerring (9) als Armierung des Federrings (6) ausgebildet ist.

## Claims

1. A cardan shaft bearing, in which the outer ring (1) of an antifriction bearing (2) and a retaining ring (3) are connected by a rubber ring (4) and are supported radially elastically on each other, the retaining ring (3) and the outer ring (1) having mutually facing stop faces (10, 11), which are covered at least partially by a damping layer (12) of rubber, the rubber ring (4) having a U-shaped profile which is open parallel to the axis (5) of the cardan shaft bearing, the rubber ring (4) being fixed on the outer ring (1) and on the retaining ring (3) at least partially in the region of their axial bounding surfaces, the cardan shaft bearing being formed by a spring ring (6) of rubber which has, distributed in the circumferential direction, liquid-filled cavities (7) which are interconnected by openings (8), and the damping layer (12) and the rubber ring (4) being formed such that they merge with each other in one piece, characterized in that the rubber ring (4) is vulcanized on, in that the inner ring of the antifriction bearing (2) is provided with a rubber coating on the side facing the shaft (14) to be supported and in that the rubber ring (4) and the spring ring (6) are formed such that they merge with each other in one piece and enclose a stop buffer (13), the stop faces (10, 11), a corrugated profiling of the stop faces (10, 11) and a seat for the outer ring (1) of the antifriction bearing (2).

2. A cardan shaft bearing according to claim 1, characterized in that the rubber coating has a profiling on the side facing the shaft (14).

3. A cardan shaft bearing according to claim 2, characterized in that the profiling is formed by grooves which are open radially in the direction of the shaft (14) and in that the grooves are fully open on both sides parallel to the axis (5) of the cardan shaft bearing.

4. A cardan shaft bearing according to any one of claims 1 to 3, characterized in that the retaining ring (3) is supported relatively radially elastically on the spring ring (6) of rubber.

5. A cardan shaft bearing according to any one of claims 1 to 4, characterized in that the cavities (7) are closed in a liquid-tight manner by the retaining ring (3) on the radially outward-facing side.

6. A cardan shaft bearing according to any one of claims 1 to 5, characterized in that the retaining ring (3) and a bearing ring (9) arranged in the outer circumference of the spring ring (6) are connected by a press fit.

7. A cardan shaft bearing according to claim 6, characterized in that the bearing ring (9) is formed as reinforcement of the spring ring (6).

## Revendications

1. Palier pour arbre à cardan, dans lequel la cage extérieure (1) d'un palier à roulement (2) et une couronne de retenue (3) sont reliées par une couronne en caoutchouc (4) et s'appuient l'une sur l'autre d'une manière élastique dans le sens radial, cependant que la couronne de retenue (3) et la cage extérieure (1) présentent des surfaces de butée (10, 11) qui sont tournées l'une vers l'autre et qui sont recouvertes, du moins partiellement, par une couche d'amortissement en caoutchouc (12), cependant que la couronne en caoutchouc (4) présente un profil en forme de U qui est ouvert parallèlement à l'axe (5) du palier pour arbre à cardan, cependant que la couronne en caoutchouc (4) est fixée à la cage extérieure (1) et à la couronne de retenue (3), du moins partiellement, dans la région des surfaces de délimitation de celles-ci dans le sens axial, cependant que le palier pour arbre à cardan comprend une couronne élastique en caoutchouc (6) comportant des cavités (7) qui sont réparties dans la direction du pourtour, qui sont remplies de liquide et qui sont reliées entre elles par des ouvertures (8), et cependant que la couche d'amortissement (12) et la couronne en caoutchouc (4) sont réalisées d'un seul tenant en se prolongeant l'une par l'autre, caractérisé par le fait que la couronne en caoutchouc (4) est fixée par vulcanisation, par le fait que la cage intérieure du palier à roulement (2) est pourvue d'un caoutchoutage sur son côté qui est tourné vers l'arbre à soutenir (14), et par le fait que la couronne en caoutchouc (4) et la couronne élastique (6) sont réalisées d'un seul tenant en se prolongeant l'une par l'autre, et qu'elles comprennent un tampon de butée (13), les surfaces de butée (10, 11), un profil ondulé des surfaces de butée (10, 11) et un logement destiné à la cage extérieure (1) du palier à roulement (2).

2. Palier pour arbre à cardan selon la revendication 1, caractérisé par le fait que le caoutchoutage présente un profilage sur son côté qui est tourné vers l'arbre (14).

3. Palier pour arbre à cardan selon la revendication 2, caractérisé par le fait que le profilage est constitué par des rainures qui sont ouvertes radialement dans la direction de l'arbre (14), et par le fait que les rainures sont complètement ouvertes des deux côtés parallèlement à l'axe (5) du palier pour arbre à cardan.

4. Palier pour arbre à cardan selon l'une des revendications à 3, caractérisé par le fait que la couronne de retenue (3) est appuyée sur la couronne élastique en caoutchouc (6) avec une élasticité relative dans le sens radial.

5. Palier pour arbre à cardan selon l'une des revendications 1 à 4, caractérisé par le fait que les cavités (7) sont fermées par la couronne de retenue (3) d'une manière étanche aux liquides du côté qui est dirigé vers l'extérieur dans le sens radial.

6. Palier pour arbre à cardan selon l'une des revendications 1 à 5, caractérisé par le fait que la couronne de retenue (3) et une couronne de palier (9) qui est disposée dans le pourtour extérieur de la couronne élastique (6) sont reliées avec un ajustement serré.

7. Palier pour arbre à cardan selon la revendication 6, caractérisé par le fait que la couronne de palier (9) est réalisée sous la forme d'une armature de la couronne élastique (6).
